**Europäisches Patentamt**

**European Patent Office**

**Office européen des brevets**

(11) Numéro de publication: **0 239 492**

**B1**

(12) **FASCICULE DE BREVET EUROPEEN**

(45) Date de publication du fascicule du brevet: **23.01.91**

(51) Int. Cl.⁵: **B 24 B 19/02, F 16 J 15/34**

(21) Numéro de dépôt: **87400660.4**

(22) Date de dépôt: **25.03.87**

(54) **Joint d'étanchéité tournant plat et son procédé d'usinage.**

(30) Priorité: **26.03.86 FR 8604337**

(43) Date de publication de la demande:
**30.09.87 Bulletin 87/40**

(45) Mention de la délivrance du brevet:
**23.01.91 Bulletin 91/04**

(84) Etats contractants désignés:
**DE FR GB**

(56) Documents cités:
**EP-A-0 013 678**
**FR-A-2 188 765**
**FR-A-2 494 380**
**GB-A-1 096 641**
**GB-A-2 054 420**
**US-A-2 367 850**
**US-A-3 796 466**
**US-A-4 525 957**

**PATENT ABSTRACTS OF JAPAN, vol. 7, no. 215
(M-244)1360r, 22 septembre 1983; & JP-A-58
109 771 (IIGURU KOGYO K.K.) 30-06-1983**

(73) Titulaire: **SOCIETE NATIONALE D'ETUDE ET DE
CONSTRUCTION DE MOTEURS D'AVIATION,
"S.N.E.C.M.A."
2, boulevard du Général Martial Valin
F-75015 Paris (FR)**

(72) Inventeur: **Collin, Claude Germain Emile
32, rue des Clos Fleuris
F-77310 Ponthierry (FR)**
Inventeur: **Desmat, Guy Marcel
20,B rue Moreau de Tours
F-77590 Bois le Roi (FR)**
Inventeur: **Legoff, Roland Edmond
8, Allée Colbert
F-91230 Montgeron (FR)**

(74) Mandataire: **Moinat, François
S.N.E.C.M.A. Service des Brevets Boîte Postale
81
F-91003 Evry Cédex (FR)**

Courier Press, Leamington Spa, England.

## Description

L'invention concerne un joint métallique d'étanchéité tournant, plat.

Il est nécessaire dans certaines machines telles que les pompes, de réaliser des butées axiales étanches pour un arbre tournant.

Or on ne sait pas pour l'instant réaliser un joint tournant plat capable simultanément d'assurer l'étanchéité de manière efficace et de résister longtemps à de fortes charges. En effet, pour assurer l'étanchéité, on peut imaginer que le joint est constitué par deux glaces planes annulaires s'appuyant l'une sur l'autre. Mais, sous l'effet de la charge axiale et de la rotation et en l'absence de lubrification, il se produirait un échauffement qui conduirait rapidement à la détérioration des éléments en contact. On s'efforce dont de lubrifier les surfaces en contact en faisant circuler le fluide ambiant sous pression entre les deux glaces. Mais si les deux glaces sont parfaitement polies, le fluide ne peut pas circuler correctement et il y a frottement. Pour qu'il puisse y avoir un film fluide, il faut usiner au moins une des deux glaces de manière qu'elle garde des traces d'usinage capable de répartir le fluide sur toute sa surface. Malheureusement, les techniques d'usinage connues (rectification cylindrique de face) laissent un état de surface qui conduit certes à une bonne lubrification mais aussi à un débit de fluide ambiant incontrôlable et souvent excessif.

C'est pourquoi, dans la pratique actuelle, on réalise généralement séparément les fonctions de butée et d'étanchéité:

une butée lubrifiée non étanche (avec des glaces usinées traditionnelement) est suivie d'un joint d'étanchéité n'ayant pas de charge importante à supporter et pouvant être réalisé ay moyen de deux surfaces planes et rodées, l'une en acier, l'autre en graphite, par exemple.

Le but de l'invention est de proposer un joint tournant plat réalisant simultanément les deux fonctions d'étanchéité et de butée sans présenter les inconvénients précités.

L'invention atteint son but grâce à un procédé spécial d'usinage des glaces planes. Ce procédé est dérivé du type connu selon lequel une surface plane annulaire du joint est rectifiée par la surface plane latérale dite "surface travaillante" d'une meule circulaire de grand diamètre qui intersecte ou "coupe" ladite surface annulaire selon deux segments de ligne courbe reliant les bords intérieur et extérieur de la surface annulaire et que l'on appellera "cordes". Mais dans ce type d'usinage connu, l'axe de la surface travaillante est parallèle à l'axe de la surface annulaire, si bien que les deux cordes sont symétriques et attaquent pareillement (sur une même profondeur) la surface annulaire. Il en résulte que la surface usinée comprend deux systèmes de traces correspondant à chacune des deux cordes. Ces deux systèmes sont croisés et fournissent un usinage dit "en soleil".

On connaît par ailleurs, par FR—A—2 494 380, un dispositif d'étanchéité mécanique dans lequel une surface de glissement comporte de fines rainures obtenues par gravure chimique.

Selon Patent Abstracts of Japan vol. 7 no. 215 (M-244) 1360, les surfaces en contact d'un anneau fixe et d'un anneau tournant comportent des rainures étroites s'étendant de l'intérieure à l'extérieur de l'anneau de manière à faire passer un fluide lubrifiant d'étanchéité.

Selon l'invention, les positions relatives de la surface annulaire et de la surface travaillante sont modifiées de manière que l'action de la surface travaillante n'affecte plus qu'une seule corde dans le sens défini ci-dessus et que le travail effectué au niveau de la corde concernée conduise à une surface usinée encore plane (ou du moins sensiblement plane) et non pas conique.

Plus précisément, selon le procédé de l'invention, on incline la surface travaillante par rapport à la surface annulaire de manière que leurs plans se coupent selon une ligne sensiblement parallèle à l'une choisie des deux cordes et que la pénétration maximale de la surface travailante dans la surface annulaire soit située à peu près au milieu de cette corde, de telle sorte que le meulage fait dans cette position ne laisse subsister que les traces non croisées dites "em demi-soleil" produites par la corde choisie et donne à la surface annulaire une excellente planéité.

Il est clair que la disposition relative particulière précitée entre la surface annulaire et la surface travaillante peut s'obtenir par tout déplacement équivalent de l'une et/ou l'autre surface.

Il est pratique, pour la compréhension du procédé, de partir de la position de meulage conventionnelle puis de s'en écarter par des déplacements simples pour arriver à la disposition requise par l'invention. Cependant, l'explication qui va suivre ne vise qu'à décrire les orientations relatives des deux surfaces en jeu. En effet, les règles traditionnelles d'approche entre la pièce à usiner et la meule doivent être respectées, ici tout particulièrement, car il ne s'agit pas de pénétrer profondément dans la pièce à usiner mais, au contraire, de l'effleurer. On commence donc par disposer la surface annulaire dans le plan de la surface travaillante de la meule et l'on prend pour références ce plan et la droite portant le diamètre commun aux deux surfaces dans cette position, puis on déplace la surface annulaire par une première rotation d'angle $\beta$ faible autour d'un axe parallèle à la droite de référence, puis par une deuxième rotation d'angle $\alpha$ faible autour d'un axe parallèle audit plan de référence et perpendiculaire à la droite de référence.

Dans la pratique, où l'arbre portant le joint d'étanchéité annulaire est initialement monté horizontalement entre deux poupées solidaires de la table d'une rectifieuse, parallèlement à l'axe de la meule et dans le même plan horizontal, la rotation d'angle $\beta$ s'obtient en modifiant la hauteur d'une des deux poupées et la rotation d'angle $\alpha$ par pivotement de la table de la rectifieuse dans son plan horizontal.

Dans la pratique, où l'arbre portant le joint d'étanchéité annulaire est initialement monté horizontalement entre deux poupées solidaires de la table d'une rectifieuse, parallèlement à l'axe de la meule et dans le même plan horizontal, la rotation d'angle β s'obtient en modifiant la hauteur d'une des deux poupées et la rotation d'angle α par pivotement de la table de la rectifieuse dans son plan horizontal.

L'angle β est de l'ordre de quelques minutes et l'angle α est environ dix fois plus grand selon les dimensions de la pièce et de la meule, mais il va de soi que l'opérateur peut les choisir dans une large gamme tout en respectant le principe de l'invention.

Ainsi selon l'invention, les traces obtenues ne sont plus que celles d'un système unique cohérent (traces dites "en demi-soleil"). Ces traces sont disposées et agissent comme les aubes du rouet d'une pompe centrifuge ou centripère selon la corde choisie et le sens de rotation de l'arbre et elles permettent de contrôler—voire d'inverser—le débit de fuite du fluide au niveau du joint.

D'autres caractéristiques et avantages ressortiront de la description suivante faite en référence aux dessins annexés sur lesquels:

—les figures 1a, 1b, 2a, 2b, 3a, 3b sont des vues schématiques, respectivement en élévation et en plan, d'un banc de meulage à trois stades de sa mise en place conforme à l'invention.

—les figures 4 et 5 montrent schématiquement un joint d'étanchéité tournant meulé portant respectivement des traces "en soleil" selon l'art antérieur, et "en demi-soleil" selon l'invention,

—les figures 6, 7, 8 sont des schémas partiels du banc de meulage des figures 1 à 3, vu sensiblement en bout, perpendiculairement au plan du joint, ne montrant que les positions respectives du joint et de la meule,

—la figure 9 est un schéma illustrant l'utilisation d'un joint usiné selon le procédé de l'invention,

—les figures 10a et 10b sont des vues du joint selon la flèche X de la figure 9 avec des traces "en demi-soleil" respectivement dans un sens et dans l'autre,

—les figures 11a, 11b, 12a, 12b, 13 et 14 sont des vues schématiques analogues aux figures 2a, 2b, 3a, 3b, 7 et 8 en montrant une variante du procédé conforme à l'invention.

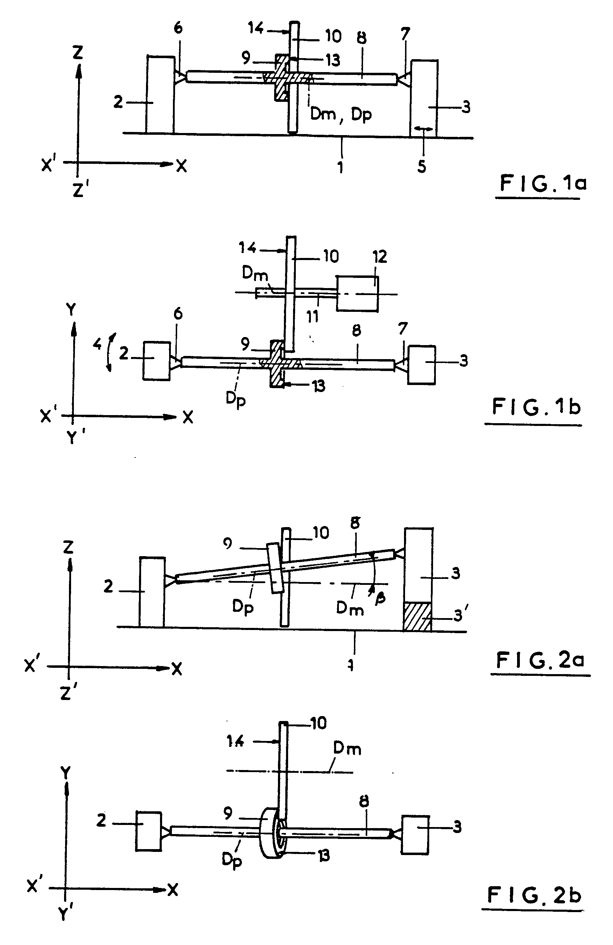

On voit sur les figures 1a et 1b un banc de meulage d'un type connu comportant une table horizontale 1 normalement réglable angulairement dans le sens de la double flèche 4, une poupée fixe 2, et une poupée mobile 3 normalement réglable axialement dans le sens de la double flèche 5.

Un arbre 8 est maintenu entre la pointe 6 et la contre-pointe 7, et peut être entraîné en rotation de manière conventionnelle. Cet arbre porte le joint plat annulaire à meuler 9.

La meule 10 est calée sur un arbre 11 entraîné par un moteur 12 (représentés uniquement sur la figure 1b).

Il convient de noter que les figures 1 à 3 sont schématiques et ne respectent pas les dimensions relatives des différents éléments. Elles visent principalement à bien faire comprendre leur disposition relative.

Les figures 1a et 1b montrent l'agencement traditionnel d'un banc de meulage, qui peut servir de point de départ pour la mise en place de l'agencement conforme à l'invention.

On désignera par x'x la direction d'avancement de la surface à usiner de la pièce 9 vers la surface travaillante de la meule 10, par y'y la direction de réglage de la distance entre l'axe de la pièce 9 et l'axe de la meule 10, par z'z la direction perpendiculaire à x'x et y'y, ces trois directions étant orthogonales entre elles, et par Dp et Dm les axes de rotation respectifs de la pièce 9 et de la meule 10.

Dans l'agencement conventionnel des figures 1a et 1b, les axes Dp et Dm sont parallèles à la direction x'x et placés dans un même plan parallèle aux deux directions x'x, y'y (plan qu'on pourra appeler horizontal).

La surface à usiner de la pièce 9 est une couronne 13 située dans un plan perpendiculaire à l'axe Dp.

La surface travaillante de la meule 10 est la zone périphérique 14 de la joue faisant face à la couronne 13. Elle est plane, circulaire, et son plan est perpendiculaire à l'axe Dm de la meule.

L'engagement de la meule 10 sur la pièce 9 est tel que la surface travaillante 14 recouvre plus que la portion de rayon correspondant à la couronne 13 sans toucher à l'arbre 8.

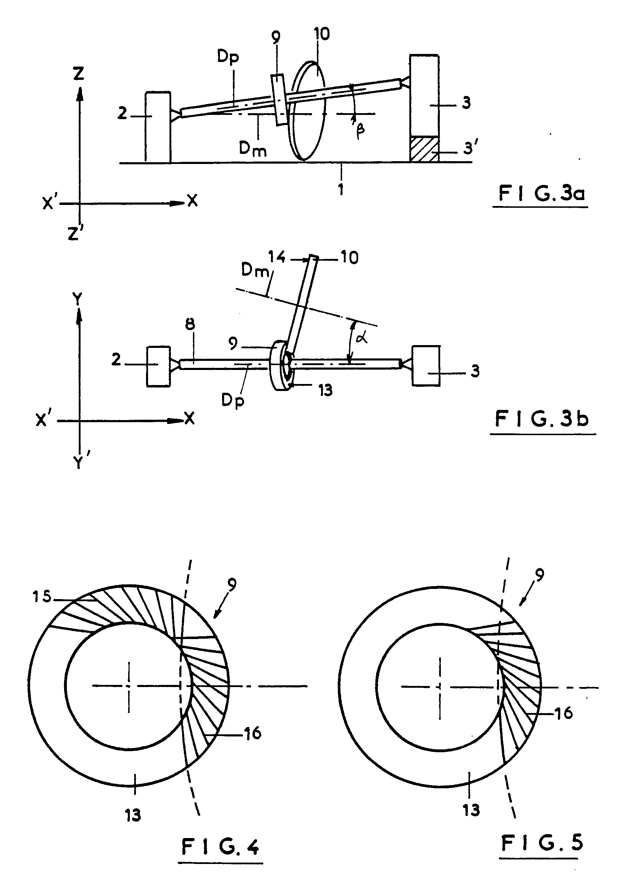

Lors d'un tel usinage la meule 10 laisse deux séries de traces croisées symétriques 15 et 16 dans la couronne 13 de la pièce 9 (fig. 4) conduisant à une figure "en soleil".

Les figures 3a et 3b montrent l'agencement conforme à l'invention permettant d'effectuer un meulage ne laissant que des traces 16 en "demi-soleil" (fig. 5).

Pour passer de l'agencement des figures 1a, 1b à celui des figures 3a, 3b, il est commode de passer par l'agencement intermédiaire des figures 2a, 2b, qui se distingue de l'agencement des figures 1a, 1b, en ce que la poupée mobile 3 a été déplacée verticalement (ici vers le haut) au moyen d'une cale 3'. La pièce 9 est donc inclinée par rapport à la verticale. La meule 10 n'est pas bougée. Elle attaque dont la partie basse de la couronne 13. On pourrait, en alternative, déplacer la poupée 3 vers le bas: la meule attaquerait alors la partie haute de la couronne 13 en laissant des traces du type 15.

Les projections orthogonales des nouveaux axes Dp et Dm sur le plan x'x, z'z font un angle β entre elles (fig. 2a) tandis que leurs projections sur le plan x'x, y'y sont toujours parallèles (fig. 2b). On comprend que si l'usinage se faisait dans cette position, l'inclinaison relative de la pièce et de la meule donnerait bien naissance à des traces d'un seul type dite "en demi-soleil", mais avec une surface usinée conique. Le déplacement relatif qui fait passer de la position des figures 2a, 2b à celle des figures 3a, 3b a pour objet de conserver sensiblement la planéité de la surface usinée.

Il fait noter que, dans la pratique, les déplacements tels que β ne sont pas prévus sur les rectifieuses connues. Ils sont obtenus ici au moyen de cales extrêmement fines que l'on glisse entre la table 1 de la rectifieuse et la poupée mobile 3, sous un angle ou sous l'autre de l'embase de la poupée mobile selon le sens de déplacement recherché.

On passe de l'agencement des figures 2a, 2b à celui des figures 3a, 3b par un décalage angulaire relatif de la meule 10 dans un plan horizontal, de sorte que les projections orthogonales des nouveaux axes Dp et Dm sur le plan x'x, y'y font maintenant un angle α (Fig. 3b) alors que leurs projections sur le plan x'x, z'z conservant un angle β. Il fait noter encore que, dans la réalité, contrairement à ce que est représenté ici pour faciliter la compréhension, c'est la table de la rectifieuse qui est décalée angulairement dans son propre plan selon la flèche 4 et non la meule 10 dont l'axe Dm est généralement fixe.

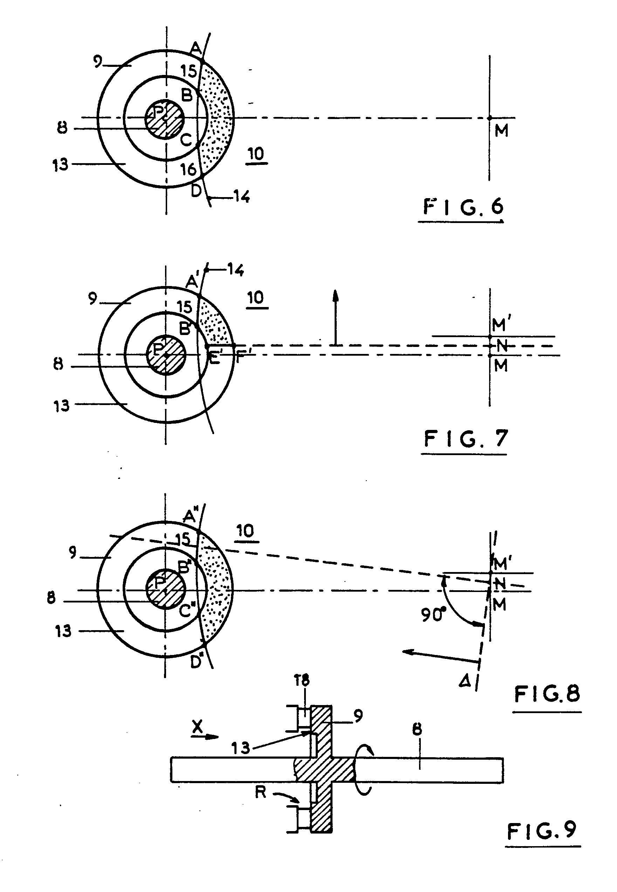

L'action d'usinage dans ce dernier agencement sera mieux comprise grâce aux schémas des figures 6 à 8 où l'échelle relative de la pièce et de la meule a été mieux respectée que dans les figures 1 à 3 (le rayon de la meule est relativement grand par rapport au rayon de la pièce).

Sur la figure 6, correspondant aux figures 1a, 1b la surface à usiner est vue de face. C'est une couronne circulaire 13 de centre P. La surface travaillante 14 de la meule 10 est plane. Son plan est confondu avec celui de la couronne 13. Sa périphérie est un grand cercle de centre M qui coupe la couronne 13 en A, B, C, D. Les deux centres P et M sont sur une même horizontale. Ce sont les conditions pour un usinage dit "en soleil": les cordes AB et CD engendrent respectivement les traces 15 et 16 de la figure 4.

Sur la figure 7, l'axe de la pièce 9 a été incliné vers le bas (contrairement aux figures 2a, 2b où l'inclinaison était vers le haut) de quelques minutes. Mais pour un observateur se déplaçant avec le pièce 9, il semble, comme représenté ici, que c'est la meule 10 qui est inclinée ves le haut en même temps que son centre est monté de M en M'; M' est en fait très légèrement en arrière du plan de la couronne 13 qui est aussi le plan du schéma. MM' est perpendiculaire à PM. Dans ces conditions, la paroi latérale 14 de la meule coupe le plan de la couronne 13 selon une ligne E'F' parallèle à PM et passant par N, tel que MN=NM'.

La pénétration de la meule est d'autant plus importante que l'on s'éloigne de cette ligne E'F' (selon la flèche vers le haut sur la figure 7) et, quand l'usinage est terminé, seules subsistent les traces 15 laissées par la corde A'B', donnant l'aspect "en demi-soleil" mais conique déjà signalé et dû à l'inclinaison relative de la meule vers le haut qui fait que le point A' pénètre plus que le point B'.

Sur la figure 8, correspondant à l'étape des figures 3a, 3b, la paroi travailannte 14 de la meule a pivoté relativement autour de son diamètre vertical qui est ici représenté par M'N pour réaliser le second déplacement et sa partie gauche a pénétré un peu plus dans le plan de la couronne 13 tandis que sa partie droite s'en est dégagée.

La ligne d'intersection des deux plans s'est donc déplacée. Elle s'est redressée et est passée de la ligne horizontale E'F'N à une ligne Δ passant toujours par le point fixe N mais d'autant plus proche de la verticale que le pivotement est plus important.

La périphérie de la surface travaillante 14 de la meule "coupe" la couronne 13 en A'', B'', C'', D''. Sa pénétration dans le plan de la couronne 13 est d'autant plus importante que l'on s'éloigne de la droite Δ vers la pièce 9 (selon la flèche vers la gauche). Si bien que, lorsque l'usinage est terminé, seules subsistent, encore ici, les traces les plus profondes 15 laissées par la corde A''B'', donnant encore l'aspect "en demi-soleil".

Pour supprimer l'aspect conique de l'usinage, on a fait pivoter relativement la meule de l'angle nécessaire pour que la droite Δ et la corde A''B'' soient approximativement parallèles, c'est-à-dire jusqu'au moment où les points A'' et B'' sont à peu près à égalité de pénétration dans la pièce, soit d'un angle α voisin de 10 fois l'angle β ci-dessus.

Concrètement, on vérifie que cette condition est réalisée lorsque, en approchant la pièce 9 de la meule 10 par translation de la table 1 de la rectifieuse selon l'axe x'x, le point de tangence de la surface travaillante 14 sur la couronne plane 13 se situe au milieu de la corde A''B''.

Ce procédé fournit des pièces dans lesquelles la pénétration est la même en A'' et B'', et maximale, mais très voisine, au milieu de l'arc A''B''. Du fait que la meule a un relativement grand diamètre et que son inclinaison sur la surface annulaire est très faible, les cordes A''B'' présentent un creux central lui aussi très faible, pouvant être inférieur à 1 μm, et la surface obtenue peut être considérée comme parfaitement plane.

Le réglage tel qu'il est décrit ci-dessus, est un optimum. Il va de soit que des pièces réalisées selon ce procédé mais avec moins de rigueur donnent encore de bons résultats et ne sortent pas du cadre de l'invention.

L'inclinaison des traces A''B'' sur le rayon PB'' est fonction du recouvrement pièce-meule (donc de la distance PM). Le sens de courbure de la trace subsistante est fonction du sens de l'inclinaison β de l'arbre 8.

Les autres caractéristiques des traces subsistantes sont déterminées par les divers paramètres de meulage, bien connus de l'homme du métier, comme le sens et la vitesse de rotation de la meule, ceux de la pièce, la constitution de la meule.

A titre d'exemple, une rugosité de 0,05 μm a été obtenue avec une vitesse de rotation de pièce de 100 trs/min, une vitesse de coupe de la meule de 27 m/s (pour un diamètre de 305 mm) et un finition par meule "Norton" A320. Une planéité meilleure que deux bandes optiques d'interféromètre monochromatique utilisant une longueur d'onde de 0,6 μm a pu être obtenue dans cet exemple où la surface annulaire est telle que les diamètres intérieur et extérieur sont respectivement 40 et 60 mm.

Autrement dit, le defaut de planéité obtenu est inférieur à 0,6 µm. Les angles d'inclinaison utilisés ont été de l'ordre de 16 minutes pour α et de 2 minutes pour β, obtenu par un rehaussement de la contre-pointe de 0,2 mm pour une longueur entre pointes d'environ 300 mm. En fonction des données géométriques de la pièce 9 et du résultat recherché, différentes valeurs peuvent être attribuées aux paramètres d'usinage. L'inclinaison des traces constituant le "rouet" de cette micropompe est chosie en fonction de la lubrification recherchée.

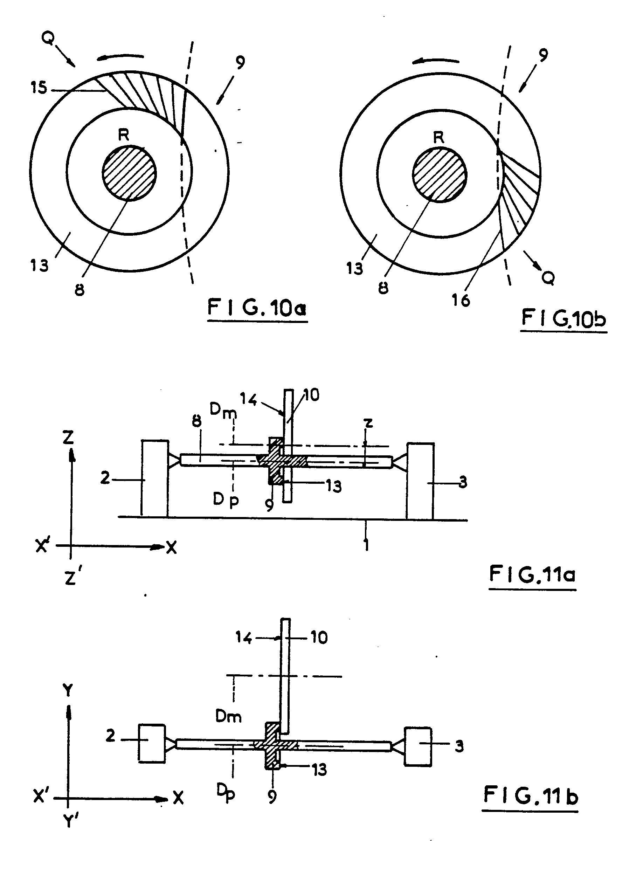

En se reportant aux figures 9, 10a et 10b, on voit la pièce 9 solidaire de l'arbre tournant 8 et coopérant avec une bague fixe 18 pour faire joint d'étanchéité et butée.

En supposant qu'une pression de fluide R s'exerce de l'intérieur vers l'extérieur du joint, comme représenté sur la figure 9, le comportement du fluide va dépendre pour un sens de rotation donné, de l'orientation des traces "en demi-soleil". Pour des traces 16 inclinées sur le rayon, de l'intérieur vers l'extérieur, dans le sens opposé à celui de la rotation (fig. 10b), l'écoulement du fluide vers l'extérieur est facilité. Pour des traces 15 inclinées sur le rayon, de l'intérieur vers l'extérieur, dans le même sens que la rotation (fig. 10a), l'écoulement du fluide vers l'extérieur est, au contraire, freiné voire inversé.

Des résultats opposés sont obtenus si la pression R s'exerce de l'extérieur du joint vers l'intérieur.

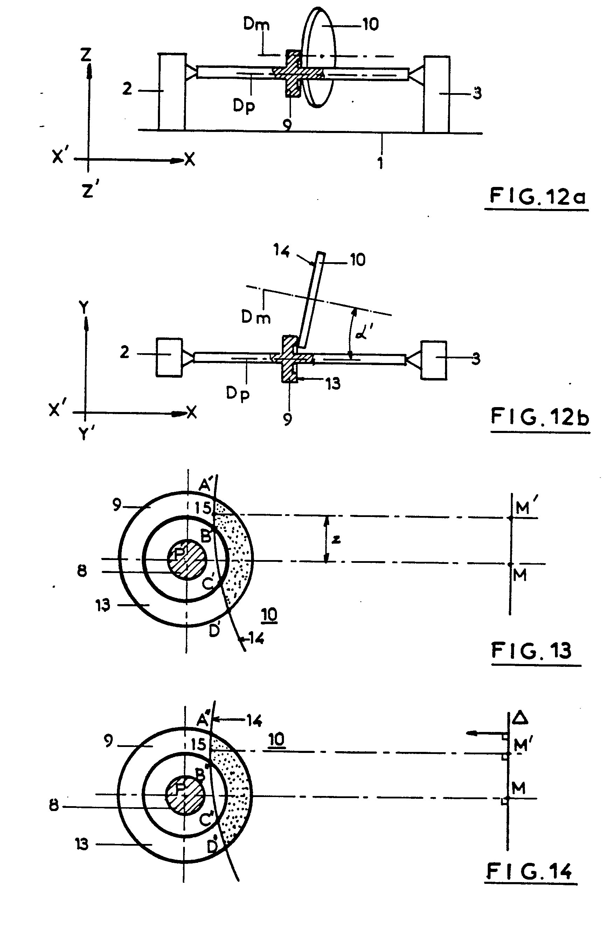

Les figures 11a, 11b, 12a, 12b, 13 et 14 montrent une variante du procédé dans laquelle les mêmes dispositions relatives de la surface annulaire 13 et de la surface travaillante 14 sont obtenues au moyen d'un autre agencement de la pièce 9 et de la meule 10. Ce nouvel agencement donne le même type de pénétration de la surface travaillante 14 dans la couronne 13. Il ne diffère du précédent que par les opérations à effectuer pour l'obtenir et par la description qui en découle. Il ne s'agit dont que d'un déplacement équivalent à celui déjà décrit et il ne sort pas du domaine de l'invention.

Comme précédemment, le point de départ est l'agencement traditionnel représenté dans les figures 1a, 1b et 6. On passe de ces figures aux figures 11a, 11b et 13 par une simple translation verticale relative z de la pièce 9, son axe Dp restant parallèle à l'axe Dm de la meule 10. La pièce 9 est placée pour que le centre de la trace désirée, ici A'B', soit dans le plan horizontal contenant l'axe Dm de la meule 10 dont la trace devient M' dans la figure 13. De là, on passe aux figures 12a, 12b et 14 par une rotation relative de la pièce 9 et de la meule 10, analogue à la rotation d'angle α précédente. L'angle α' de cette rotation est à définir selon les besoins mais on le prendra du même ordre de grandeur que α.

On constate que l'intersection Δ du plan de la surface travaillante 14 avec le plan de la surface annulaire 13 est, dans ce nouvel agencement, la droite MM' qui est toujours dans le plan de la surface annulaire 13 ou une droite parallèle à MM', donc que la pénétration de la meule 10 dans la couronne 13 augmente dans le sens de la flèche perpendiculaire à MM'. En conséquence, la trace A''B'' sera la plus profonde et subsistera seule, son centre sera le point le plus profond de la trace mais très peu profond et on aura une excellente planéité de la couronne 13, comme prévu.

Cependant, dans la pratique, les rectifieuses connues ne sont pas construites pour permettre facilement la translation verticale z de la pièce 9.

## Revendications

1. Procédé d'usinage d'un joint (9) métallique d'étanchéité tournant plat, du type selon lequel une surface plane annulaire (13) du joint est rectifiée par la surface plane latérale dite "surface travaillante" (14) d'une meule circulaire (10) de grand diamètre qui intersecte ou "coupe" ladite surface annulaire selon deux segments de ligne courbe reliant les bords intérieur et extérieur de la surface annulaure (13) et que l'on appellera "cordes" (AB, CD) caractérisé en ce qu'on incline la surface travaillante (14) par rapport à la surface annulaire (13) de manière que leurs plans se coupent selon une ligne (Δ) sensiblement parallèle à l'une (A''B'') choisie des deux cordes et que la pénétration maximale de la surface travaillante dans la surface annulaire soit située à peu près au milieu de cette corde de telle sorte que le meulage fait dans cette position ne laisse subsister que des traces non croisées (15) dites "en demi-soleil" produites par la corde (A''B'') choisie et donne à la surface annulaire une excellente planéité.

2. Procédé selon la revendication 1, caractérisé en ce qu'on commence par disposer la surface annulaire (13) dans le plan de la surface travaillante (14) de la meule et l'on prend pour références ce plan et la droite (PM) portant le diamètre commun aux deux surfaces dans cette position puis on déplace la surface annulaire (13) par une première rotation d'angle β faible autour d'un axe parallèle à la droite de référence (PM), puis par une deuxième rotation d'angle α faible autour d'un axe parallèle audit plan de référence et perpendiculaire à la droite de référence (PM).

3. Procédé selon la revendication 2, dans lequel l'arbre (8) portant le joint d'étanchéité annulaire (9) est initialement monté horizontalement entre deux poupées (2, 3), solidaires de la table (1) d'une rectifieuse, de telle sorte que les axes (Dp) de la pièce (9) et (Dm) de la meule (10) soient parallèles entre eux et dans le même plan horizontal caractérisé en ce que la rotation d'angle β s'obtient en modifiant la hauteur d'une (3) des deux poupées et la rotation d'angle α par pivotement de la table (1) de la rectifieuse dans son plan horizontal.

4. Procédé selon l'une quelconque des revendications 2 ou 3, caractérisé en ce que l'angle β est de quelques minutes, et l'angle α est d'un ordre de grandeur dix fois plus grand.

**Patentansprüche**

1. Verfahren zur Bearbeitung einer flachen metallischen Drehdichtung (9), bei dem eine ebene ringförmige Fläche (13) der Dichtung von der als "arbeitende Fläche" bezeichneten ebenen Seitenfläche (14) einer kreisförmigen Schleifscheibe (10) mit großem Durchmesser geschliffen wird, die die genannte ringförmige Fläche (13) in zwei im folgenden als "Sehnen" bezeichneten bogenförmigen Linienabschnitten (AB, CD) schneidet, die die Innen- und Außenränder der ringförmigen Fläche (13) verbinden, dadurch gekennzeichnet, daß man die arbeitende Fläche (14) gegenüber der ringförmigen Fläche (13) so neigt, daß ihre Ebenen sich in einer Linie (A) schneiden, die zu einer ausgewählten (A'', B'') der beiden Sehnen annähernd parallel verläuft, und daß die ringförmige Fläche (13) in der Mitte dieser Sehne liegt, derart, daß der in dieser Position ausgeführte Schleifvorgang nur nicht gekreuzte, von der ausgewählten Sehne (A'', B'') erzeugte "halbmondförmige" Spuren (15) bestehen läßt und der ringförmigen Fläche (13) eine ausgezeichnete Ebenheit verleiht.

2. Verfahren nach Anspruch 1, dadurch gekennzeichnet, daß man zu Beginn die ringförmige Fläche (13) in der Ebene der arbeitenden Fläche (14) der Schleifscheibe anordnet und als Referenzen diese Ebene und die Gerade (PM) heranzieht, die den in Dieser Position beiden Flächen gemeinsamen Durchmesser trägt, dann die ringförmige Fläche (13) um einen ersten kleinen Rotationswinkel Beta um eine zur Referenz-Geraden (PM) parallele Achse und dann um einen zweiten Rotationswinkel Alpha um eine parallel zu der genannten Referenz-Ebene und senkrecht zur Referenz-Geraden (PM) verlaufende Achse verdreht.

3. Verfahren nach Anspruch 2, bei dem die die ringförmige Dichtung (9) tragende Welle (8) zunächst horizontal zwischen zwei Spindeln (2, 3) montiert wird, die fest mit dem Tisch einer Schleifmaschine verbunden sind, derart, daß die Achse (Dp) des Werkstücks (9) und die Achse (Dm) der Schleifscheibe (10) parallel zueinander verlaufen und in derselben horizontalen Ebene liegen, dadurch gekennzeichnet, daß min die Drehung um den Winkel Beta durch Änderung der Höhe einer (3) der beiden Spindeln und die Drehung um den Winkel Alpha durch Verschwenken der Tischs (1) der Schleifmaschine in seiner horizontalen Ebene bewirkt.

4. Verfahren nach einem der Ansprüche 2 oder 3, dadurch gekennzeichnet, daß der Winkel Beta einige Minuten beträgt und daß der Winkel Alpha in einer Größenordnung liegt, die zehnmal größer ist.

**Claims**

1. Machining process for a flat metallic seal (9), of the type in which a flat annular surface (13) of the seal is ground by the flat side surface called the "working surface" (14) of a circular grinding wheel (10), of large diameter, which intersects or "cuts" the said annular surface in accordance with two segments of a curved line connecting the inner and outer edges of the annular surface (13) which are termed "chords" (AB, CD) characterised in that one inclines the working surface (14) in relation to the annular surface (13) in such a way that their planes intersect along a line ($\Delta$) substantially parallel to one of the selected chords (A''B'') and in that the maximum penetration by the working surface will be situated at about the centre of this chord so that the grinding accomplished in this position only leaves behind the pattern (not criss-crossed) (15) called "half sun" pattern, produced by the chord selected (A''B'') and confers excellent flatness on the annular surface.

2. Process in accordance with Claim 1, characterised in that one starts by placing the annular surface (13) in the plane of the working surface (14) of the grinding wheel and in that one adopts as datum points this plane and the straight line (PM) linking the diameter common to the two surfaces and then one moves the annular surface (13) through a first slight angle of rotation (ß) around an axs parallel to the straight datum line (PM), then through a second, slight angle of rotation α around an axis parallel to the said datum plane and perpendicular to the straight datum line (PM).

3. Process in accordance with Claim 2, in which the shaft (8) carrying the annular seal (9) is initially mounted horizontally between two tailstocks (2, 3) fixed to the bed (1) of the grinding machine in such a way that the axes (Dp) of the part (9) and (Dm) of the grinding wheel (10) are parallel to one another and in the same horizontal plane, characterised in that the rotation through the angle β is obtained by altering the height of one (3) of the tailstocks and that the rotation through the angle α is obtained by pivoting the bed (1) of the machine in a horizontal plane.

4. Process in accordance with either of Claims 2 or 3, characterised in that the angle ß is one of several minutes, and in that the angle α is of the order of ten times greater.

FIG. 1a

FIG. 1b

FIG. 2a

FIG. 2b

FIG.3a

FIG.3b

FIG.4

FIG.5

FIG. 6

FIG. 7

FIG.8

FIG.9

FIG.10a

FIG.10b

FIG.11a

FIG.11b

FIG.12a

FIG.12b

FIG.13

FIG.14